# EUROPEAN PATENT APPLICATION

(11) **EP 1 344 726 A1**
(43) Date of publication of application: **17.09.2003**
(21) Application number: 01919820.9
(22) Date of filing: 06.04.2001
(51) Int. Cl.: B65G 1/137, B65G 61/00, G06F 17/60

(54) **LOGISTIC SYSTEM**

(30) Priority: 07.04.2000 JP 2000107203
(71) Applicant: SUNTORY LIMITED, Osaka-shi, Osaka 530-8203 (JP); Suntory Logistics Limited, Osaka-shi, Osaka 530-8203 (JP)
(72) Inventor: AIDA, Tsuyoshi, Ibaraki-shi, Osaka 567-0044 (JP)
(74) Representative: Calderbank, Thomas Roger
(86) International application number: JP0103008
(87) International publication number: WO01076983

(57) **Abstract**

A logistics system for realizing a high efficiency, waste-free flow of saleable items in an economy comprised of users and customers, constructed from a demand information layer 12 which receives as input requests for saleable items from customers 15 and generates integrated demand information, a supply information layer 13 which receives as input this integrated demand information and generates integrated supply information for economic entities making up the business process relating to the supply of the saleable items relating to the requests from the customers 15, and an integrated transportation layer 14 which receives as input the integrated supply information, generates integrated transportation information relating to the saleable items, and integratedly executes the physical transportation of the saleable items within the economy 10.

## Description

### TECHNICAL FIELD

The present invention relates to a logistics system for quickly and efficiently satisfying requests of customers for saleable items such as goods, services and information, which include money and knowledge, through a management mechanism comprised of a demanding system, supplying system, and transporting system.

### BACKGROUND ART

In recent years, logistics systems designed to optimize the flow of saleable items in an economy through the maximum utilization of computers have been developed to enable companies, businesses, and other economic entities to quickly and efficiently supply large amounts of various types of saleable items to meet with the diverse requests of their customers.

Such logistics systems, explained in detail later with reference to Fig. 9, suffer from the following problems:
(i) The companies, businesses, etc. constructing the communication platforms (CP) of the logistics systems design and develop the frameworks, routines, and knowhow for the operation of the logistics systems they run themselves for each unit of companies, businesses, or saleable items separately and invest in them separately.
   As a result, the problems arise that independent development work and investment become necessary and the operating costs of the logistics systems end up being increased. This gives rise to the waste of duplicate development and investment when seen from the economy as a whole.
   Further, logistics systems by nature should continue to grow in sophistication and complexity along with the change and increasing complexity of business processes resulting from the expansion of markets and diversification of the saleable items and along with the pursuit of greater efficiency and optimization and change in areas of application, so there is the problem that a limit arises in how far a single company, business, etc. can handle the above development work, investment, and operation on its own.
(ii) To solve the problem explained in the above (i), it is becoming practical to go beyond the framework of single companies, businesses, or other entities dealing individually with these systems and adopt a group strategy where associated companies, businesses, etc. share business processes or work together or tie up to form alliances.

By adopting such a group strategy and sharing business processes, it is possible to lower the costs required for development and investment. Even if such a group strategy is adopted, however, expansion to the point of coordination in business processes among companies or businesses in different fields would require co-development predicated on the extensions of the existing frameworks of individual companies, businesses, or other entities or individual business processes. The differences in rules, terminology, corporate culture, etc. would become barriers making this extremely difficult.

Still further, there is the disadvantage that when various changes or modifications occur in business processes within that group, the risk would arise of repeat development and investment being required when dealing with these changes or modifications. Further, as one change, a new entry into the group would cause the problem of requiring as a condition for entry new investment based on the existing processes and procedures and other constraints and, in the final analysis, great waste in terms of both investment and efficiency when viewing the economy as a whole.

Further, viewing the above (i) and (ii) together, there is also the critical problem that the system structure, which inherently suffers from the defect of requiring that each change be dealt with and adjustments made in the operation of the business system for each logistics system when the above changes and modifications occur, ends up becoming even more enormous.

Further, there is a similar problem even when introducing a means for improving efficiency or increasing optimization by a discovery, knowledge, method, etc. newly developed or found and put into practical use or when changing or discarding existing means.

### DISCLOSURE OF INVENTION

Therefore, the present inventors engaged in in-depth research and as a result obtained the idea of going beyond the framework of individual companies, businesses, etc. or going beyond even the framework of groups, assembling these into a single economy, forming a single demand information layer as a whole and a single supply information layer as a whole as information integration layers, and thereby integrating into one transportation layer and constructing a single logistics system comprised of these layers integrated into one for the economy as a whole, and thereby completed the present invention.

That is, the present invention, in consideration of the above problems, has as its object to form a single demand information layer common to the economy as a whole, a similar single supply information layer, and a similar single integrated transportation layer and thereby construct a single integrated logistics system for customers and economic entities as a whole.

To achieve the above object, the present invention provides a logistics system for realizing a highly efficient, waste-free flow of saleable items in an economy comprised of users and customers. This logistics system is constructed from a demand information layer (12) which receives as input requests for saleable items from customers (15) and generates integrated demand information, a supply information layer (13) which receives as input this integrated demand information and generates integrated supply information for economic entities making up a business process relating to the supply of the saleable items relating to the requests from the customers (15), and an integrated transportation layer (14) which receives as input the integrated supply information, generates integrated transportation information relating to the saleable items, and integratedly executes the physical transportation of the saleable items within the economy (10).

### BRIEF DESCRIPTION OF DRAWINGS

Fig. 1 is a view of the principle of a logistics system according to the present invention;
Fig. 2 is a view of the basic configuration for realizing the principle shown in Fig. 1;
Fig. 3 is a view of a demanding system (DS) of Fig. 2;
Fig. 4 is a view of a supplying system (SS) of Fig. 2;
Fig. 5 is a view of a transporting system (TS) of Fig. 2;
Fig. 6 is a view of an embodiment for specifically realizing the basic configuration shown in Fig. 2;
Fig. 7 is a view capturing the embodiment of the present invention from its virtual aspects;
Fig. 8 is a view capturing the embodiment of the present invention from its practical aspects; and
Fig. 9 is a view summarizing a conventional logistics system.

### BEST MODE FOR CARRYING OUT THE INVENTION

To clarify the effects of the present invention, first a conventional logistics system will be explained.

Fig. 9 is a view summarizing a conventional logistics system.

In this figure, reference numeral 1 indicates a logistics system (LS). In the figure, as one example, as the LS's of individual companies, individual businesses, or individual saleable items, the first, second, ... n-th logistics systems LS1, LS2, and LSn are shown.

The logistics systems 1 basically have substantially the same configurations. Explaining the logistics system (LS2) 1 as a typical example, in the LS2, there is a communication platform (CP) CP2 at the center. Management mechanisms DS21 (demanding system), SS21 (supplying system), TS21 (transporting system), ... DS2n, SS2n, and TS2n function in accordance with the demand information relating to the saleable items input from the customers connected to the CP2. That is, in the LS2, products are produced and shipped out by the "just in time" system in small lots on the optimal factory lines in response to the customer requests. The saleable items are loaded on a large number of trucks or other vehicles and delivered between the factories and warehouses and consuming areas. Note that for space reasons in the figure, the management mechanisms 4 are shown for only the LS2, but there are similarly a DS11, SS11, TS11, ... DS1n, SS1n, and TS1n for LS1 and a DS1n SS1n, TS1n, ... DSnn, SSnn, and TSnn for LSn.

To optimize the flow of saleable items in these management mechanisms 4, that is, to transfer saleable items by the lowest operation and management costs and the greatest effectiveness and efficiency, managing systems (MS) 3 built around computers are provided as MS21, ..., MS2n. MS21, ..., MS2n find the optimal solutions for the flow of saleable items in accordance with the request information input from the customers through the communication platform CP2 using the computers and cause the management mechanisms 4, that is, the DS21, SS21, TS21 ... DS2n, SS2n, and TS2n to function.

Giving a specific example, if LS2 is a logistics system of a business handling soft drinks, MS21 for example has jurisdiction over the business process of PET bottled mineral water, while MS2n has jurisdiction over the business process of for example canned coffee beverages.

According to the logistics system (LS) 1 shown in Fig. 9, the various problems explained in detail in the "BACKGROUND ART" arise. The present invention for solving these problems will be explained in detail below.

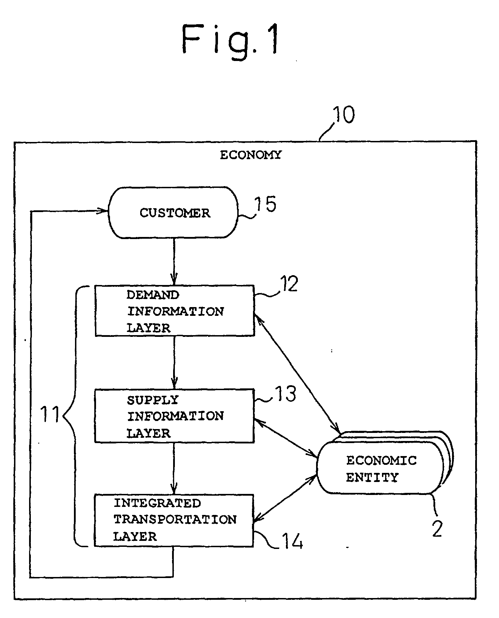

Fig. 1 is a view of the principle of a logistics system according to the present invention.

The logistics system 11 according to the present invention is a logistics system to be applied to the flow of saleable items (not shown) in an economy 10 comprised of customers 15 and economic entities 2. Here, a "customer" is defined to include an individual, company, or business providing required information on saleable items. Further, an "economic entity" is defined as a company, business, etc. forming part of a business process relating to the supply of such saleable items.

Further, "saleable items" mean goods, services, or information relating to a business process or work of an economic entity in an economy comprised of customers and economic entities.

The logistics system 11, as shown in the figure, is comprised of a demand information layer 12, a supply information layer 13, and an integrated transportation layer 14.

The demand information layer 12 receives as input request information from customers 15 relating to saleable items and generates integrated demand information for economic entities 2 using this request information. The supply information layer 13 receives as input the integrated demand information and generates integrated supply information for economic entities 2 forming part of the business process relating to the supply of saleable items relating to the requests from the customers 15.

The integrated transportation layer 14 receives as input the integrated supply information, generates integrated transportation information relating to the saleable items, and executes the physical transportation of the saleable items integratedly in the economy 10. The logistics system 11 of the present invention is in principle comprised of these layers 12, 13, and 14.

The thus constructed logistics system 11 solves the problems arising due to the logistics systems being individually dealt with in units of individual companies, businesses, or saleable items in the above-mentioned prior art and can optimize the flow of saleable items.

The idea of constructing a logistics system 11 integrating and centralizing an economy as a whole has never been proposed in the past and is novel. This has become more practical due to the rapid improvement in the advanced information infrastructure as represented by the Internet.

In the past, as such an integrated and centralized logistics system, a nationwide or global scale logistics system for the shipping industry (for example, the transportation of designated packages to individuals) has been proposed and has already been put into practice. Such a logistics system in the shipping industry and the logistics system 11 of the present invention, however, differ fundamentally in the following two points. First, in the case of the shipping industry, the system is limited to the transportation business of the collection of saleable items from customers and delivery to customers, while in the case of the present invention, the system is applied to the economy starting from requests from customers for saleable items to the production, procurement, storage, and delivery of the same, that is, the entire business process from consumption to production, purchase, and sales. Second, it covers with its operational scope all companies, businesses, and other economic entities 2 regardless of whether they are in the same industries or different industries.

Therefore, a transportation system free of waste as viewed as the economy as a whole is realized.

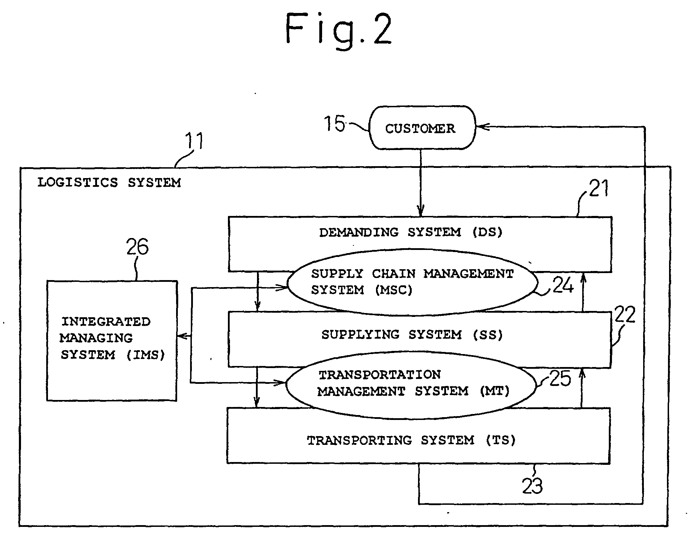

Fig. 2 is a view of the basic configuration for realizing the principle shown in Fig. 1.

In this figure, the basic elements making up the logistics system 11 include the demanding system (DS) 21 for converting requests for saleable items arising from customers 15 into demand information, a supplying system (SS) 22 for converting the demand information into supply information, and a transporting system (TS) 23 for converting the supply information to transportation information and executing the physical transportation of the saleable items.

In the basic configuration of Fig. 2, the characterizing features of the present invention are a supply chain management system (MSC) 24 and transportation management system (MT) 25. Further characterizing the present invention is the integrated managing system (IMS) 26.

The supply chain management system (MSC) 24 is interposed between the demanding system (DS) 21 and supplying system (SS) 22 and, on a single enterprise basis, manages the demanding system and supplying system to optimize demand and supply.

The transportation management system (MT) 25 is interposed between the transporting system (TS) 23 and supplying system (SS) 22 and, on a single enterprise basis, manages the supplying system and transporting system to optimize supply and transport.

Further, the integrated management system (IMS) 26, on a single enterprise basis, manages the supply chain management system (SCM) 24 and transportation management system (TS) 25 to optimize the flow of saleable items.

The logistics system (LS) 11 of the present invention shares and standardizes the DS 21 and SS 22 in the overall economy made up of the customers and economic entities. Therefore, the TS 23 is also shared and standardized in the economy as a whole.

The logistics system (LS) 11 of the present invention shown in Fig. 2 differs greatly from the logistics system in the above-mentioned shipping industry as illustrated below.

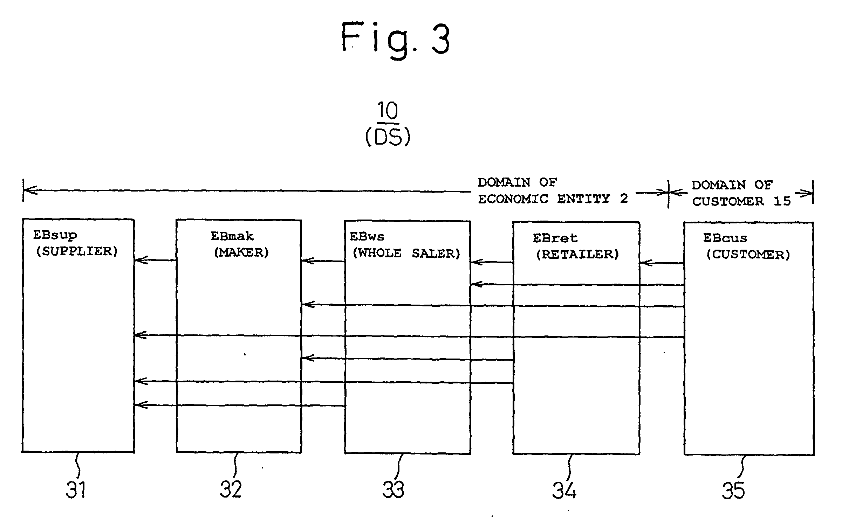

Fig. 3 is a view of the demanding system (DS) of Fig. 2,

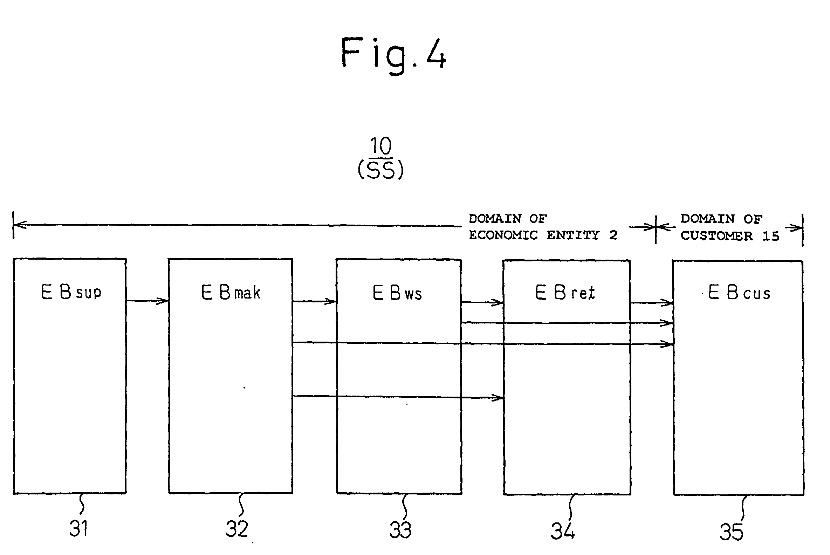

Fig. 4 is a view of the supplying system (SS) of Fig. 2, and

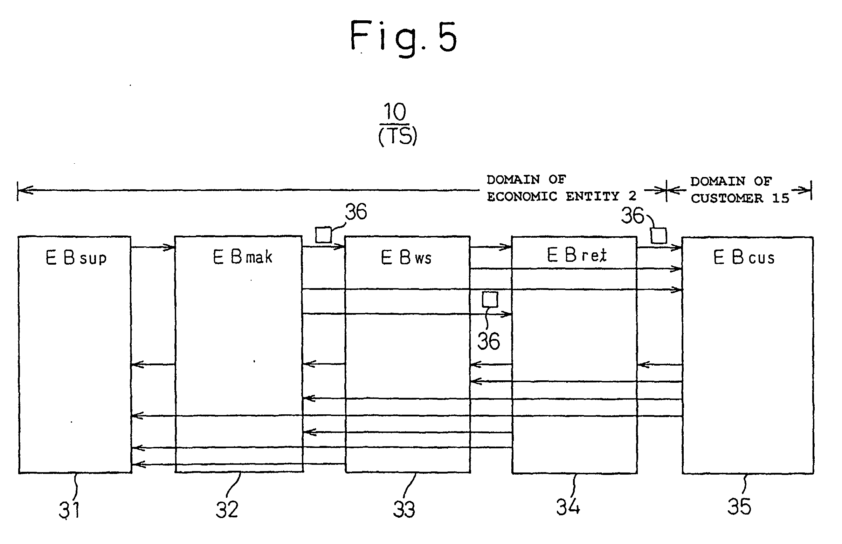

Fig. 5 is a view of the transporting system (TS) of Fig. 2. All are drawn schematically.

First, referring to Fig. 3, the economy 10 is divided into a customer 15 domain and a company or business or other economy entity 2 domain. The economic entity 2 domain is divided into a plurality of stages along the flow of requests or the flow of saleable items. Each stage forms an economic body (EB) 31 to 34. Note that a customer 15 is also considered as an economic body (EB customer) 35.

The economic body (EB) 31 is for example a supplier (EB supplier) providing raw materials for the saleable items,
the EB 32 is a manufacturer (EB maker) producing goods or services based on the raw materials,
the EB 33 is a wholesaler (EB wholesaler) of the produced goods or services, and
the EB 34 is a retailer/outlet (EB retailer) of the goods or services. Note that while not shown, there are also economic bodies executing transportation, for example, shippers or warehousers.

In Fig. 3, the arrows from the right to the left indicate various request information. Such requests, as illustrated, arise between various economic bodies (EB).

The DS receives as input the request information from customers and outputs demand information.

Next, referring to Fig. 4, the flow of the supplying system SS becomes the opposite to the flow of the demanding system DS shown in Fig. 3. In this figure, the arrows from the left to the right indicate various supply information.

The SS receives as input the demand information and outputs the supply information.

Fig. 5 shows the configuration of the transporting system TS. Saleable items are transferred along the arrow direction from the left to right in accordance with the supply information of Fig. 4. Note that in this figure three saleable items 36 are illustrated as an example. For example, these may include finished products, parts, raw materials, and packing materials.

Note that in Fig. 5, the arrows from the right to the left indicate not the flow of transportation of finished products to the customers, but the flow of returned goods, recycled goods, reclaimed goods, and pallets and other transport materials.

That is, the TS receives as input the supply information, outputs the transportation information, and executes the physical transportation of the saleable items.

Here, the suppliers such as manufacturers of raw materials and packing materials are themselves EBmak in view of the functions of production. There are therefore suppliers as a previous process.

At the DS 21 (Fig. 3), the maximization of customer satisfaction over the goods, services, and other saleable items in consumption, purchase, procurement, and reclamation is the index of optimization.

At the SS 22 (Fig. 4), the minimization of the total amount of transport relating to the production, cargo, positioning, transport, loading, and distribution-processing is the index of optimization.

Further, at the TS 23 (Fig. 5), the minimization of the transport costs for the saleable items in the physical transportation and delivery, storage, entry to and exit from warehouses, loading, and distribution processing is the index of optimization.

Further, the MSC 24, for example, on a single enterprize basis, manages the demanding system and supplying systems by for instance optimizing the inventory allocations, intra-center transport plans, or production plans so as to optimize the demand and supply based on the demand information and supply information.

Further, the MT 25 for example on a single enterprize basis, manages the supplying system and transporting system by for instance optimizing the transport facility capacities or transported lots so as to optimize the supply and transport based on the supply information and transportation information.

Finally, the IMS 26 in Fig. 2 adjusts the delivery dates or delivery times with respect to the demand information through the MSC 24 and MT 25 or provides information on substitutes or related goods so as to optimize the operation of the logistics system as a whole, that is, optimize the flow of saleable items.

Note that in the above example, the explanation was given using certain goods as the saleable items, but the present logistics system can also be applied to goods, services, and information including money and knowledge as saleable items. For example, it can be applied to the flow of money, that is, the business process of billing and settlements.

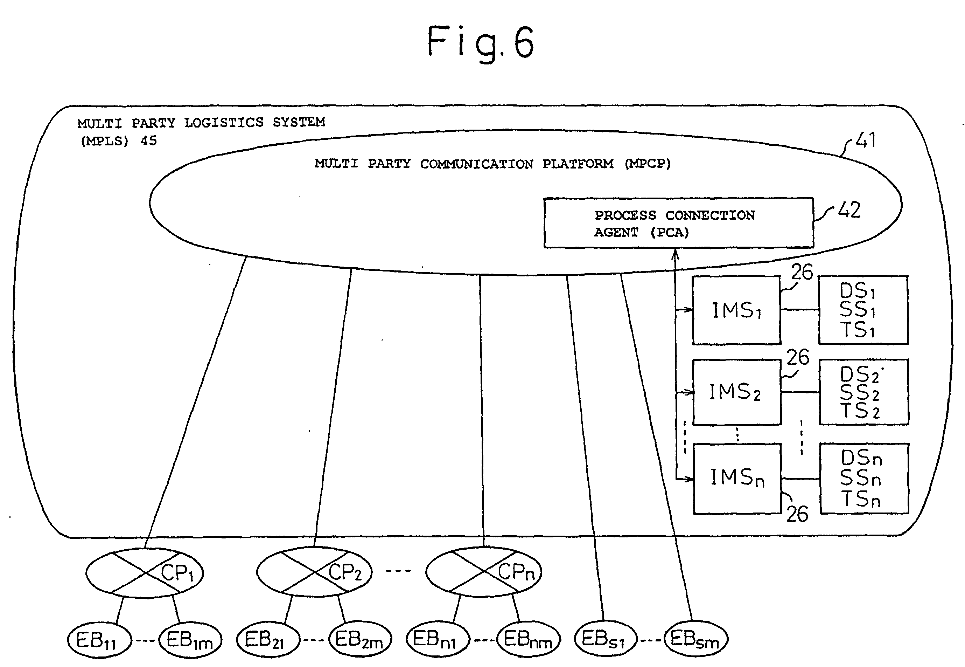

Fig. 6 shows an embodiment for specifically realizing the basic configuration shown in Fig. 2.

In this figure, reference numeral 41 represents an integrated platform (MPCP: multiparty communication platform), 42 a process connection agent (PCA), and 26 integrated management systems (IMS1, IMS2, IMSn). The communication platforms (CP) 2, economic bodies (EB), demanding systems (DS), supplying systems (SS), and transporting systems (TS) are the same as explained above.

Compared with the conventional configuration shown in Fig. 9 above, the configuration of the present invention shown in Fig. 6 is completely different. That is, in the present invention, the frameworks of the individual companies, individual businesses, or individual saleable items (LS1, LS2, ..., LSn in Fig. 9) are completely removed. Further, looking at the IMS's 26, in the past, several individual systems were established in parallel such as the MS11, ..., MS1n, MS21, ..., MS2n, MSn1, ..., MSn, but in the present invention, they are completely integrated such as IMS1, IMS2, and IMSn. The units of integration are business processes or management functions.

Therefore, the logistics system 11 according to this embodiment of the present invention is a logistics system applied to the flow of saleable items 36 in an economy 10 comprised of customers 15 and economic entities 2,
characterized by forming a standardized integrated communication platform (MPCP) 41 in the economy 10 and, on a single enterprize basis, managing the customers and economic entities.

Further, the platform 41 is provided with a process connection agent 42. The process connection agent 42 can connect with economic bodies for the flow of information relating to saleable items.

Note that the "platform" spoken of here means standardized media of the Internet, EDI, telephone, facsimile, i-mode communications, data, audio, and display communications and includes platforms in the sense ordinarily used in general computer systems. Specifically, it includes hardware forming the basis of the computer system and OS's (operating systems) for operation of computers. The process connection agent 42 built into the platform 41 works as main function of this embodiment. Note that the process connection agent 42 may also be configured connected to the platform 41.

The process connection agent 42 has or connects
(i) a supply chain management system (MSC) 24 interposed between the demanding system (DS) 21 for converting requests issued by customers 15 for saleable items 36 to the demand information and the supplying system (SS) 22 for converting the demand information to supply information and centrally managing the demanding system and the supplying system and
(ii) a transportation management system (MT) 25 interposed between the transporting system (TS) 23 for converting the supply information to transportation information and executing the physical transportation of the saleable items 36 and the supplying system (SS) 22 and, on a single enterprize basis, managing the supplying system and transporting system. Note that in Fig. 6, the MSC 24 and MT 25 are not shown.

Here, the process connection agent 42 has or connects integrated management systems (IMS) 26 for, on a single enterprize basis, managing the above supply chain management system (i) and the above transportation management system (ii) and optimizing the flow of saleable items.

In this case, the characteristic feature of this embodiment is the optimization of the flow of saleable items for each business process by the integrated management systems. These are the IMS1, IMS2, ..., IMSn shown in Fig. 6.

Giving a specific example, the above business processes include at least one of a sales plan control process, shipment projection control process, transportation control process, production control process, purchase control process, incoming order control process, outgoing order control process, inventory control process, delivery center and warehouse control process, distribution processing control process, shipping control process, cargo information control process, ordered saleable item information control process, product control process, and sales performance control process. For example, the IMS1 (consumption control process) to IMS9 (shipping control process) are working at the same time as the integrated management system (IMS) 26. These business processes are however illustrations. It is possible to freely include original business processes for each economic entity 2.

Note that in the past the MS11, MS1n, ... MSn1, MSnn shown in Fig. 9 executed the above business processes and calculated the optimal solutions separately and independently and in duplicate or association.

Therefore, according to the present embodiment, it is possible to give rise to a new management function featuring an effectiveness and efficiency not seen in the past. This is given rise to first by integrating the MS11, MS1n, ..., MSn1, MSnn shown in Fig. 9.

That is, the process connection agent 42 creates added value by centralizing the software, knowhow, and knowledge relating to the above supply chain management and transportation management. An integrated management system given this added value can optimize the flow of saleable items for each economic entity.

Giving one example, assuming the economic entities A to G have as essential business processes the above inventory control process and warehouse control process, it is possible to make mutual use of them or consolidate or discard them by merger or linkage of the inventory control processes of the economic entities A to D and the warehouse control processes of the economic entities E to G in accordance with need and therefore give rise to a more efficient, waste-free inventory and warehouse control process.

On the other hand, according to the present embodiment, the invention is also advantageous when seen from another aspect than the aspect of mutual use or consolidation or abandonment.

That is, the customers and economic entities 2 can connect to the process connection agent 42 in any way. Further, they can be disconnected from the process connection agent 42 in any way. In the logistics system 11, connection/disconnection to the economic bodies becomes possible. Note that the process connection agent 42 is connected to the shared integrated communication platform 41 and can transfer information relating to the saleable items with the economic bodies connected to the same. The platform may be connected to by a dedicated line or by the electronic communications network as of the Internet. According to the latter, that is, the Internet, the above connection/disconnection is extremely easy. Therefore, the customers and economic entities can connect by images such as inserting a plug into the platform 41 and conversely can disconnect by images such as pulling out a plug.

When viewing the above embodiment (Fig. 6) as a whole, the following can be said.

Sharing of the knowledge, knowhow, software, and other "optimization and streamlining tools", goods, services, and information, that is, "saleable items", and vehicles, trucks, ships, aircraft, containers, pallets, cartons, warehouses, conveyors, etc., that is, "transporting means", and "communication platforms (EDI networks, Internet, VAN, facsimiles, telephones, i-mode, etc.)" owned by the various companies, businesses, etc. by the related companies, businesses, and other economic entities by pooling of information leads to realization of further efficiency. The present invention is realized specifically by an integrated communication platform (MPCP) 41 which is able to easily connect or disconnect and integratedly operate with logistics elements of individual companies and businesses, that is, their (1) transporting means, (2) optimization and streamlining tools, and (3) communication platforms.

The integrated platform 41, as mentioned above, enables integration of a plurality of conventionally separate LS's over a wide range and to a high performance by the inclusion of a process connection agent 42 serving as a location for linking the individual companies and businesses. Here, the integrated platform 41 integrates communication of overall information, integrates the IMS's 43, and places them under its control so as to centrally manage information relating to saleable items and optimizes the flow of saleable items so as to enable changes in the logistics environment to be swiftly handled. A logistics system having an integrated platform 41 and process connection agent 42 in this way is called a "multi party logistics system" (MPLS).

Finally, the architecture of the present embodiment will be shown from its virtual aspects and practical aspects.

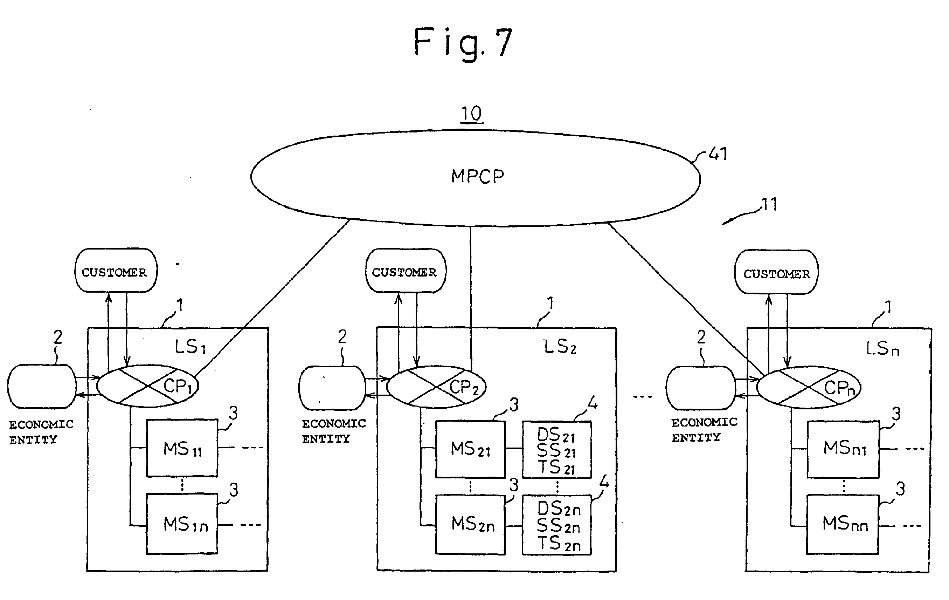

Fig. 7 is a view capturing the embodiment of the present invention from its virtual aspects.

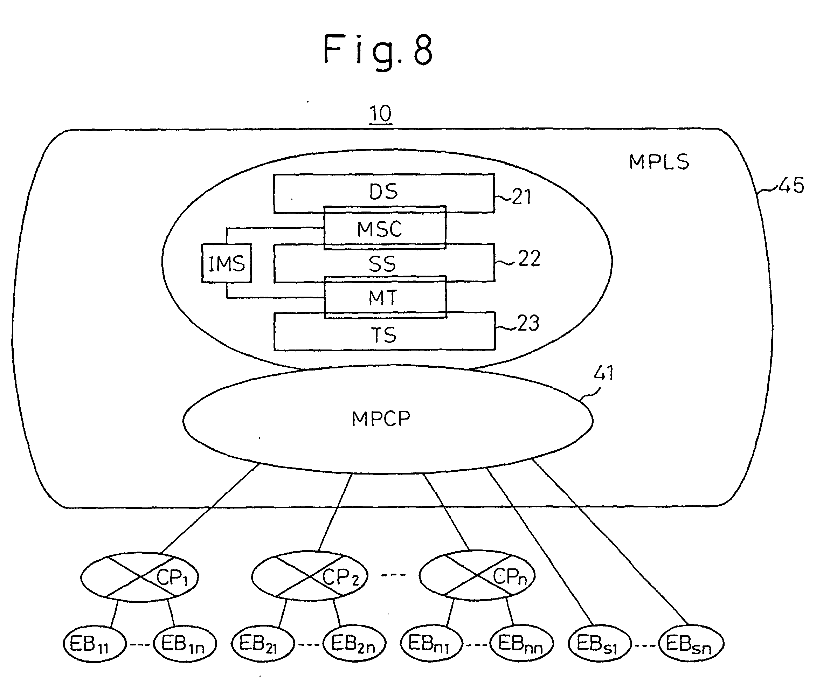

Fig. 8 is a view capturing the embodiment of the present invention from its practical aspects.

Note that the reference numerals and symbols used in Fig. 7 and Fig. 8 represent the same elements as those used in Fig. 2 and Fig. 6 etc.

As shown in Fig. 7, for the individual companies or businesses, the logistics systems (LS) appear to operate by exclusively utilizing the MPCP 41 as individual CPs. This provides the individual companies or businesses with familiar business processes unique to each.

In reality, however, as shown in Fig. 8, the demanding systems (DS), supplying systems (SS), and transport systems (TS) of the individual companies or businesses are all operated integratedly on the MPLS 45.

In the final analysis, the individual companies or individual businesses etc. appear to operate their LS's individually, but in reality the logistics system of the present invention operates all LS's in a manner integrating all of the companies and businesses.

When considering the advantages inherent to the present embodiment with reference to Fig. 7 and Fig. 8, the following can be said.

Since it is a virtual reality process provided by the MPLS 45, the process of transaction in business processes for an economic entity 2 is the same as in the past where a terminal connected to the CP of the local system connected to the MPCP 41 was simply accessed. In practice, however, the business process is one in which outgoing order processing, incoming order processing, shipment instructions, demand and supply management, replenishment loading, operation instructions, checking, billing, payment, cargo tracking, inquiry processing and other work and further the framework and tools for optimization and streamlining in the planning, for example, shipment projections, short cycle demand-supply management, continuous automatic replenishment, controlling desirable inventory, simple networking, new product management, product closing management, integrated transportation arrangement system, global cross docking, etc. and communications infrastructure, personnel (operations, storage, and management), and other logistic elements are all processed, on a single enterprize basis, all together in a manner shared by all economic entities.

In a business process utilizing the MPLS 45, it is possible to cut the (1) "cost of logistics operation" relating to the saleable items themselves such as goods, services, or information including money and knowledge and (2) "running and adjusting cost" spent for the logistics system itself. Further, the scope of application, performance, and quality in the individual business processes and management functions are shared and improved to the maximum level of the logistic elements.

Further, by upgrading the output performance and streamlining the framework and operation in the individual elements of all logistic systems, all of the companies or businesses and other economic entities connected to the MPLS 45 enjoy these merits in tandem.

Further, in addition to the connection and disconnection between customers and economic entities, it is easy to set, modify, introduce, and discard elements such as functions, knowhow, software optimization tools, etc. Due to this, it is possible to deal with changes in the logistics environment agilely, flexibly, and accurately and increase customer satisfaction.

As explained above, according to the present invention, a logistics system is realized which solves the problems in past development, investment, and operation of the waste when viewing the economy as a whole and which can operate to satisfy both effectiveness and efficiency and agilely cope with changes in the environment.

## Claims

1. A logistics system used for the flow of saleable items in an economy comprised of customers and economic entities,
said logistics system **characterized by** being constructed from
a demand information layer which receives as input request information for saleable items from customers and generates integrated demand information for the economic entities using the request information,
a supply information layer which receives as input said integrated demand information and generates integrated supply information for economic entities making up a business process relating to the supply of the saleable items relating to the requests from the customers, and
an integrated transportation layer which receives as input said integrated supply information, generates integrated transportation information relating to the saleable items, and integratedly executes the physical transportation of the saleable items within the economy.

2. A logistics system used for the flow of saleable items in an economy comprised of customers and economic entities,
said logistics system **characterized by** being provided with
a supply chain management system interposed between a demanding system converting requests issued from customers for saleable items to demand information and a supplying system converting said demand information to supply information and, on a single enterprize basis, managing the demanding system and supplying system and
a transportation management system interposed between a transporting system converting said supply information to transportation information and executing physical transportation of said saleable items and the supplying system and, on a single enterprize basis, managing the supplying system and transporting system.

3. A logistics system as set forth in claim 2, further provided with an integrated management system for, on a single enterprize basis, managing the supply chain management system and transportation management system and optimizing the flow of saleable items.

4. A logistics system used for the flow of saleable items in an economy comprised of customers and economic entities,
said logistics system **characterized by** forming a standardized integrated communication platform in the economy and, on a single enterprize basis, managing the customers and economic entities.

5. A logistics system as set forth in claim 4, further provided with a process connection agent in said integrated communication platform, said process connection agent able connect the customers and economic entities to enable the flow of information relating to saleable items.

6. A logistics system as set forth in claim 5, wherein said process connection agent has or connects
a supply chain management system interposed between the demanding system converting a request issued by a customer for saleable items to demand information and a supplying system converting the demand information to supply information and, on a single enterprize basis, managing the demanding system and the supplying system and
a transportation management system interposed between the transporting system for converting the supply information to transportation information and executing the physical transportation of the saleable items and the supplying system and, on a single enterprize basis, managing the supplying system and transporting system.

7. A logistics system as set forth in claim 6, wherein said process connection agent has or connects an integrated management system for, on a single enterprize basis, managing the above supply chain management system and the above transportation management system and optimizing the flow of saleable items.

8. A logistics system as set forth in claim 7, wherein said integrated management system optimizes the flow of saleable items for each business process.

9. A logistics system as set forth in claim 8, wherein said business process forms at least one of a sales plan control process, shipment projection control process, transportation control process, production control process, purchase control process, incoming order control process, outgoing order control process, inventory control process, delivery center and warehouse control process, distribution processing control process, shipping control process, cargo information control process, ordered saleable item information control process, product control process, and sales performance control process.

10. A logistics system as set forth in claim 7, wherein the integrated management system optimizes the flow of saleable items for each economic entity.

11. A logistics system as set forth in claim 5, wherein said customers and economic entities can freely connect to said process connection agent and can freely disconnect from said process connection agent.

12. A logistics system as set forth in claim 5, wherein said process connection agent optimally connects said customers and economic entities by transferring information relating to saleable items via an electronic communications network.
